# EUROPEAN PATENT SPECIFICATION

(11) **EP 0 577 604 B1**
(45) Date of publication and mention of the grant of the patent: **18.09.1996**
(21) Application number: 92902096.4
(22) Date of filing: 30.12.1991
(51) Int. Cl.: B28C 5/00, B28C 5/06, C04B 24/16, C04B 24/24, E04F 21/12, E04G 21/04

(54) **METHOD FOR BLENDING OF ADMIXTURES IN A SPRAYED CONCRETE MASS AND AGENT FOR APPLICATION OF THE METHOD**
VERFAHREN ZUM BEIMISCHEN VON ZUSCHLAGSTOFFEN IN EINE VERSPRÜHTE BETONMASSE UND WIRKSTOFF ZUR ANWENDUNG DES VERFAHRENS
PROCEDE DE MELANGE D'ADJUVANTS DANS UNE MASSE DE BETON PROJETEE ET AGENT SERVANT A APPLIQUER CE PROCEDE

(30) Priority: 08.01.1991 NO 910082
(43) Date of publication of application: 12.01.1994
(73) Proprietor: SANDOZ LTD., 4002 Basel (CH)
(72) Inventor: SANDOZ LTD., 4002 Basel (CH)
(86) International application number: NO9100160
(87) International publication number: WO9211982

(56) References cited:
- EP-A- 0 208 535
- AT-B- 356 571
- GB-A- 2 020 722
- GB-A- 2 221 673
- NO-B- 150 851
- SE-B- 411 724
- SE-B- 422 427
- US-A- 4 433 731

## Description

The invention concerns a method for blending of admixtures in a pouring mass which is transported to site and where the mass should have a consistency which is suitable for casting of the mass on a base of concrete, steel or other material construction, for repair, reinforcement, protection, sealing against water or other purposes. The invention also concerns an agent which is suitable for application of the method.

When spraying compounds on wall and roof surfaces, a predominant problem is to make the sprayed mass adhere to the surfaces, while at the same time the mass has a consistency which enables it to be sprayed. This problem applies particularly in cases of spraying of coats which have to have a certain thickness, the major working area in which this kind of spraying is used being concrete, mortar and plaster spraying. A similar spraying technique is also used, although to a lesser degree, on other materials, such as filling masses, plastic masses, etc. The following description, however, is based on the most common example, viz. concrete spraying; shotcreting.

Sprayed concrete pouring is a technique whereby in one and the same operation a concrete mass is fed to a spray nozzle from which the concrete is sprayed on to a surface where it sets almost immediately and forms the required concrete coating. It is transported via hoses or pipes either by pumping of a ready-mixed concrete (the wet method) or by transporting premixed dry concrete (without water) by compressed air (the dry method). Immediately after the concrete leaves the hose it will be intercepted and deposited against one side of formwork or a base.

When the concrete meets the base, it is vital that it should stick as the thickness of the concrete increases. The concrete must be sprayed firmly against the base and must be cohesive so that it is possible to spread it out in the required thickness.

A vertical surface coating is simple to perform, but in the case of thick layers, rejection can easily occur in the mass. When spraying concrete according to the wet method, the mass which is sprayed out must fulfil two conditions, viz. it must be easy to pump and must be adhesive as it leaves the nozzle.

In order to obtain this kind of quality, a number of admixtures are used for concrete. If it is to be fed through pipes and hoses, concrete must have a certain consistency which in practice prevents it from sticking to the base. To achieve the desired effect with regard to fixing and attachment to the base, accelerators are added to the mass, either before it is transported through the tubes or pipes, or preferably by adding the accelerator in the spray nozzle. The accelerator will cause an increase in the rate of hardening of the concrete, so that it will be vital to use the correct amounts. Alternatively, thickeners are added to the spray concrete, primarily of the type which react to water or the binding agent, i.e. the cement. One problem with introduction in the nozzle is that the distribution of accelerator can be uneven, which results in poor quality. Another problem with the addition of accelerator is that it will reduce the compressive strength of the concrete and thus reduce the quality of the end product.

When spraying masses on wall and roof surfaces, a problem thus arises with regard to the addition of substances, both in the correct quantities and to some extent also in adding the correct substances. For example, when adding water-reducing agents, the slump of the concrete will increase and the mixture will be easier to pump, but will not adhere so easily to the base and rejection can easily occur in the mass as the thickness increases. If water is added the quality of the concrete will decrease and more cement will have to be used, which will add to the cost and is not always desirable with regard to the quality of the end product. The use of accelerators which are added to the mass in a nozzle will lead to a reduction in the strength of the end product. There is, moreover, the disadvantage that the mass will harden directly after application, thus making further treatment extremely difficult. Similar problems also arise in the application of spray masses other than concrete, particularly cement-based masses.

One solution which has been considered is to add several substances simultaneously, so that the mass to be sprayed has both good pumping properties as well as good hardening properties, but this has been impossible to achieve as the substances affect one another, i.e. react with one another and neutralize the respective desired effects and to some extent have made application impossible. This has therefore not been a solution to the problems.

The object of the present invention is to find an admixture which does not affect the concrete mass, i.e. the binding agent in the concrete, such as cement, but which nevertheless produces the require binding effect to the base surface and the actual concrete mass, and the desired hardening during and after application. The object, therefore, is to provide a method for the addition of substances to the spray mass, together with agents suitable for this purpose which make it possible to transport the spray mass through pipes and hoses in an optimal manner and allow the mass to set so quickly that rejection and drop-out are prevented, while at the same time retaining a consistency which enables it to be treated and possibly smoothed and/or dressed.

This object is achieved by means of the method together with the agent which is characterized by the claims 1-4. The invention also concerns the method to improve the consistency of a sprayed concrete masses as defined in claims 5 and 6.

EP 0 208 535 discloses a process of producing a flowing concrete in which different admixtures are added including a "segregation-controlling agent" which can be a methylcellulose compound and a "flowing agent" which can be a sulfonic acid/formaldehyde high condensate. However, the flowing agent also contains polyvinyl alcohol as a compulsory further component and a third (or fourth) compulsory component is a superplasticizer. All these different admixtures are present to keep the concrete flowing and there is no mention of any interaction.

AT 356 571 discloses a storage-stable, low viscosity, fluid admixture consisting of a dispersion of some organic polymers in an aqueous salt solution or in an organic solvent. No mention is made of using two different components which should interact with each other.

In connection with the invention the surprising discovery has been made that with a two-component admixture, in which the reaction between the two components gives the desired effect of improving consistency and in which the components react with each other, but not with the mass, in other words independently of the binding agent in the mass, especially cement in these masses, it has become possible to add substances which both give the desired fluidity and particularly increased pumpability, during transport, while at the same time the quality of the concreted coating mass is retained. This can be achieved despite the fact that components of this type are not traditionally used in combination. This has been made possible by the fact that the components are added at different points in time and that they only react with each other, but not necessarily with the mass. In addition to the agents in accordance with the invention, other conventional admixtures can also be added, such as accelerators which react with the binding agent in the mass, e.g. cement and have a further effect.

For example, a component can be added which increases the slump of a concrete mixture, e.g. a water reducing agent and/or superplasticizer and in the other component a substance which neutralizes the effect of the water reducing agent and effects a rapid change in the consistency together with hardening. At the same time accelerator, fibre, silica, etc. can also be added in quantities which do not cause an inadmissible reduction in the quality of the concrete, but on the contrary improve its quality. Such extra admixtures can be added separately or mixed directly with one or distributed between both components, in that admixture can be performed both during mixing or during the spraying of the mass. Such combinations and mixtures of the two components can be in the form of liquid solutions or mixtures or as mixtures of powders.

It is advantageous to add one component directly to the concrete or spray mass, while the other component is added in the nozzle under pressure or together with pressurized air and the other admixtures. The sequence, however, it immaterial since all that matters is that the substances should not be added simultaneously, so that the reaction between the components of the substances does not occur until the moment of casting. Thus all the side-effects of reactions between the substances during transport are avoided and, as it is the reaction between the components which causes adhesion to the surface, it will also be possible to adjust its strength by means of the admixtures, while the quality of the concrete remains unaffected, or only affected in the desired direction by means of a smaller admixture of accelerator, silica or the like.

As components in the agent in accordance with the invention, substances are used which are recognized admixtures for cement, mortar and concrete. The components act together as a flocculant, coagulant and/or association compound or as a gelling agent. For one component substances are chosen from water soluble synthetic and natural organic polymers of cellulose (ether)derivatives, including methylcellulose, carboxylic methylcellulose, hydroxyethylcellulose, methyl and hydroxypropylmethylcellulose, polyvinylalcohol, polyethyleneoxide, polyacrylamides, alginates and derivates of these, in that substances from the above-mentioned groups can be combined as components.

As the other component, recognized water reducing, dispersant and/or super wetting admixtures for cement, mortar and concrete are chosen, e.g. lignin derivatives, sulphonated condensation derivatives between melamine, naphthalene and formalin, and/or recognized retarders based on carboxylic acid derivatives, phosphates, etc. One component can be added in dosing quantities, calculated as a percentage of e.g. cement weight and 0.005-0.5%, calculated as active pure solid matter. The other component can be added with advantage in dosing quantities of 0.05-5% based on the same calculations. In practice the substances will be added to the combination and then preferably mixed with recognized admixtures for concrete. These mixtures can be in powder or liquid form after mixing.

The substances in one component can be described as stabilizing, gelling, water retarding, viscosity adjusting, with a thixotropic effect, primarily aimed at improving workability, pumpability, etc.

The invention is particularly applicable when adding admixtures in order to improve the consistency of a concrete spray mass, but since the agents mainly react with each other and not with the actual spray mass, the agents will also be able to be used in connection with plaster masses or spraying of fillers, in that case without cement.

When using the method in connection with a concrete mass, it is advantageous to use a dry mass into which one component is introduced and mixed with water in a continuous stream through a flow mixer or other mixer, or the mass is mixed on site, in which case a ready-mixed mass is used, e.g. premixed concrete, but in such a way that both components are added at the casting site, but at different points in the process.

The consistency of the concrete mass can be further regulated-adjusted by allowing the mass to become harsher, primarily by reducing the slump of the concrete, in that the effect of wetting admixtures, especially superplasticzers, is reduced or eliminated.

The relative proportions of the two components can be adjusted in order to regulate the consistency of the spray mass or pouring mass to the required value. Many modifications as well as other areas of application will be possible within the framework of the invention. Concrete applied by means of the method according to the invention will be able to be dressed after spraying and it will be possible to regulate the softness of the concrete. The method will also be applicable for dry spraying and not only for the wet method.

## Claims

1. A method of admixing additives to a sprayed concrete mass suitable for casting onto substrates of concrete, steel or other materials, for repair, reinforcement, protection, proofing against water or other purposes, characterised in that the additives to be admixed are divided into two groups of components, one group comprising water-reducing agents, dispersants and/or superplasticisers, e.g. lignin derivatives, sulphonated condensation derivatives of melamine, naphthalene and formalin, and/or retarders based on carboxylic acid derivatives, phosphates, etc. and the other group comprising water-soluble, synthetic and/or natural organic polymers, e.g. cellulose(ether)derivatives such as methylcellulose, carboxymethylcellulose, hydroxymethylcellulose, hydroxypropylmethylcellulose; polyvinylalcohol, polyethyleneoxide, polyacrylamides, alginates and derivatives of these; and that each of these groups of components is added and mixed into the mass at different points in time or at different positions in the transport path of the mass.

2. A method in accordance with claim 1, characterised in that one component is added to the mass before it is transported, e.g. through a hosepipe system, while the other component is added to the mass at the moment of casting.

3. A method in accordance with claim 1, characterised in that one component is added directly to the concrete mass while the other component is added in the nozzle under pressure or together with pressurised air and other conventional admixtures.

4. A method in accordance with claim 1, characterised in that there are used as the other component substances chosen from recognised water-reducing, dispersant and super wetting admixtures which are recognised in their use for cement, mortar and concrete, including e.g. lignin derivatives, sulphonated condensation derivatives of melamine, naphthalene and formalin, and/or retarders based on carboxylic acid derivatives, phosphates, etc.

5. A method in accordance with claim 1 for improved adjustment of the consistency of a sprayed concrete mass characterised in that the admixture is composed of at least one component from each group defined in claim 1, and in that the components from each of these groups are added to the mass separate from each other, the components from each group reacting when mixed to flocculate, coagulate or react in some other way in the mass without reacting with the binding agent itself in the mass whereby improved pumpability of the mass during transport is achieved together with no deterioration in the coating properties of the mass, e.g. adhesion to substrate, compressive strength development etc.

6. A method in accordance with claim 5, characterised in that the first component consists of polyethyleneoxide, preferably the high-viscosity varieties thereof and the other component consists of a condensed sodium naphthalenesulphonate.

## Patentansprüche

1. Verfahren zum Einmischen von Additiven in eine spritzbare Betonmasse, die geeignet ist zum Gießen auf Substrate aus Beton, Stahl oder anderen Materialien, zur Reparatur, Verstärkung, Schutz, Abweisung gegen Wasser oder für andere Zwecke, dadurch gekennzeichnet, daß die zuzumischenden Additive in zwei Gruppen von Komponenten aufgeteilt werden, wobei eine Gruppe wasserredduzierende Mittel, dispergierende Mittel und/oder Superverflüssiger, z.B. Ligninderivate, sulfonierte Kondensationsderivate von Melamin, Naphthalin und Formalin und/oder Verzögerer auf Basis von Carbonsäurederivaten, Phosphaten etc. umfaßt und die andere Gruppe wasserlösliche, synthetische und/oder natürliche organische Polymere, z.B Cellulose(ether)derivate wie Methylcellulose, Carboxymethylcellulose, Hydroxyethylcellulose, Hydroxypropylmethylcellulose; Polyvinylalkohol, Polyethylenoxid, Polyacrylamide, Alginate und Derivate davon umfaßt und daß jede dieser Gruppen von Komponenten zu der Masse zugegeben und mit der Masse vermischt wird zu verschiedenen Zeitpunkten oder an verschiedenen Positionen des Transportweges der Masse.

2. Verfahren nach Anspruch 1, dadurch gekennzeichnet, daß eine Komponente zu der Masse zugegeben wird, bevor sie transportiert wird, z.B. durch ein Schlauchsystem, während die andere Komponente zu der Masse in dem Moment des Gießens zugegeben wird.

3. Verfahren nach Anspruch 1, dadurch gekennzeichnet, daß eine Komponente direkt zu der Betonmasse zugegeben wird, während die andere Komponente in der Düse unter Druck oder zusammen mit unter Druck gesetzter Luft und mit anderen üblichen Mischungen zugegeben wird.

4. Verfahren nach Anspruch 1, dadurch gekennzeichnet, daß als andere Komponente Substanzen verwendet werden, die ausgewählt sind aus anerkannten wasserreduzierenden, dispergierenden und superbenetzenden Mischungen, die für die Verwendung für Zement, Mörtel und Beton anerkannt sind, einschließlich Ligninderivaten, sulfonierten Kondensationsderivaten von Melamin, Naphthalin und Formalin und/oder Verzögerern auf Basis von Carbonsäurederivaten, Phosphaten etc.

5. Verfahren nach Anspruch 1 zur verbesserten Einstellung der Konsistenz einer Spritzbetonmasse, dadurch gekennzeichnet, daß die Mischung aus mindestens einer Komponente jeder in Anspruch 1 definierten Gruppe zusammengesetzt ist und daß die Komponenten jeder dieser Gruppen zu der Masse getrennt voneinander zugegeben werden, wobei die Komponenten jeder Gruppe reagieren, wenn sie vermischt werden, sodaß sie ausflocken, koagulieren oder in anderer Weise in der Masse reagieren, ohne mit dem Bindemittel selbst in der Masse zu reagieren, wodurch eine verbesserte Pumpfähigkeit der Masse während des Transports erreicht wird, ohne daß die Beschichtungseigerschaften der Masse, z.B. die Haftung am Substrat, die Druckfestigkeitsentwicklung etc. beeinträchtigt werden.

6. Verfahren nach Anspruch 5, dadurch gekennzeichnet, daß die erste Komponente Polyethylenoxid, bevorzugt dessen hoch-viskose Variante, ist und die andere Komponente ein kondensiertes Nathrimnaphthalinsulfonat ist.

## Revendications

1. Une méthode d'addition d'adjuvants à une masse de béton pulvérisée appropriée pour le coulage sur des substrats en béton, en acier ou en d'autres matières, pour la réparation, le renfort, la protection et l'hydrofugation ou d'autres objectifs, caractérisée en ce que les adjuvants à ajouter sont divisés en 2 groupes de composants, l'un des groupes comprenant des agents réducteurs d'eau, des agents de dispersion et/ou des superplastifiants, par exemple des dérivés de la lignine, des dérivés de condensation sulfonés de la mélamine, du naphtalène et de la formaline et/ou des retardateurs à base de dérivés d'acide carboxylique, de phosphates etc... et l'autre groupe comprenant des polymère organiques synthétiques et/ou naturels hydrosolubles, par exemple des dérivés de la cellulose (éther), tels que la méthylcellulose, la carboxyméthylcellulose, l'hydroxyméthylcellulose, l'hydroxypropylméthylcellulose, l'alcool polyvinylique, l'oxyde de polyéthylène, les polyacrylamides, les alginates et leurs dérivés; et en ce que chacun de ces groupes de composants est ajouté et mélangé dans la masse à différents intervalles de temps ou à divers endroits du système de transport de la masse.

2. Une méthode selon la revendication 1, caractérisée en ce qu'un groupe de composants est ajouté à la masse avant son transport, par exemple à travers un système de tuyau, alors que l'autre groupe de composants est ajouté à la masse au moment du coulage.

3. Une méthode selon la revendication 1, caractérisée en ce qu'un groupe de composants est ajouté directement à la masse en béton, alors que l'autre groupe de composants est ajouté dans la buse sous pression ou ensemble avec de l'air comprimé et d'autres adjuvants habituels.

4. Une méthode selon la revendication 1, caractérisée en ce qu'on utilise comme autre groupe de composants, des substances choisies parmi des adjuvants réducteurs d'eau, des agents de dispersion et des supermouillants qui sont connus pour leur utilisation dans le ciment, le mortier et le béton y compris par exemple des dérivés de la lignine, des dérivés de condensation sulfonés de la mélamine, du naphtalène et de la formaline et/ou des retardateurs à base de dérivés d'acide carboxylique, de phosphates etc...

5. Une méthode selon la revendication 1 pour améliorer le réglage de la consistance d'une masse de béton pulvérisée, caractérisée en ce que l'adjuvant est composé d'au moins un composant de chaque groupe défini à la revendication 1, et en ce que les composants de chacun de ces groupes sont ajoutés à la masse séparément les uns des autres, les composants de chaque groupe réagissant lorsqu'ils sont mélangés pour floculer, coaguler ou réagir d'une manière ou d'une autre dans la masse, sans réagir avec le liant lui-même dans la masse, une pompabilité améliorée de la masse étant ainsi obtenue pendant le transport sans détérioration des propriétés de revêtement de la masse, par exemple l'adhésion au substrat, le développement de la résistance à la compression etc...

6. Une méthode selon la revendication 5, caractérisée en ce que le premier composant consiste en oxyde de polyéthylène, de préférence à viscosité élevée, et l'autre composant est constitué de naphtalènesulfonate de sodium condensé.
